# EUROPÄISCHE PATENTSCHRIFT

(11) **EP 1 068 100 B1**
(45) Veröffentlichungstag und Bekanntmachung des Hinweises auf die Patenterteilung: **12.05.2004**
(21) Anmeldenummer: 99911769.0
(22) Anmeldetag: 11.03.1999
(51) Int. Cl.: B60R 7/02

(54) **LADERAUM FÜR EIN KRAFTFAHRZEUG UND SEGMENTIERUNGSVORRICHTUNG**
STORAGE FACILITY FOR A MOTOR VEHICLE AND SEGMENTATION DEVICE
ESPACE DE CHARGEMENT D'AUTOMOBILE ET DISPOSITIF DE SEGMENTATION

(30) Priorität: 08.04.1998 DE 19815733; 11.05.1998 DE 19820726; 19.08.1998 DE 19837685
(43) Veröffentlichungstag der Anmeldung: 17.01.2001
(73) Patentinhaber: BOS GmbH & Co. KG, 73773 Aichwald (DE)
(72) Erfinder: AMENT, Eduard, D-73773 Aichwald (DE); SEEL, Holger, D-71134 Aidlingen (DE); SCHLECHT, Werner, P., D-71665 Vaihingen (DE); EHRENBERGER, Marina, D-73730 Esslingen (DE)
(74) Vertreter: Patentanwälte Ruff, Wilhelm, Beier, Dauster & Partner
(86) Internationale Anmeldenummer: PCT/EP1999/001570
(87) Internationale Veröffentlichungsnummer: WO 1999/052740

(56) Entgegenhaltungen:
- EP-A- 0 647 547
- EP-A- 0 667 260
- DE-A- 2 729 877
- DE-A- 3 147 785
- DE-A- 3 433 080
- DE-A- 4 128 701
- DE-A- 4 234 812
- DE-A- 4 239 470
- DE-A- 19 738 130
- FR-A- 2 755 655
- FR-A- 2 767 099
- GB-A- 2 261 856
- GB-A- 2 310 173
- GB-A- 2 318 775
- US-A- 5 685 470

## Beschreibung

Die Erfindung betrifft eine Segmentierungsvorrichtung für einen Laderaum eines Kraftfahrzeugs, die wenigstens ein zumindest abschnittsweise formstabiles Trenngebilde aufweist, das in dem Laderaum fahrzeugfest ausrichtbar ist, wobei das Trenngebilde einen formstabilen Rahmen aufweist, der an einer Wandung des Laderaums zwischen einer an der Wandung anliegenden Ruheposition und einer den Laderaum in wenigstens zwei Raumabschnitte aufteilenden, bis zu einer gegenüberliegenden Wandung erstreckten Funktionsposition schwenkbeweglich gelagert ist.

Aus der GB 23 10 173 A ist eine gattungsgemässe Segmentierungsvorrichtung für einen Laderaum eines Kraftfahrzeugs bekannt, die ein in einem formstabilen Rahmen aufgespanntes Trennnetz aufweist. Der Rahmen ist mehrteilig ausgeführt und ermöglicht eine Aufspannung zur Abtrennung eines Laderaumes von einem Fahrgastraum innerhalb eines Kraftfahrzeugs.

Es ist auch bekannt, (US 5 685 470 A), einen Kofferraum eines Kraftfahrzeugs durch das Einsetzen formstabiler Trennrahmen in feste Haltebereiche an Wandungen des Kofferraumes in mehrere Teilbereiche aufzuteilen. Zwischen den auf gegenüberliegenden Seiten im Kofferraum angeordneten Rahmen ist ein Haltenetz aufspannbar, das flexibel gestaltet ist und in unterschiedlichen Positionen zwischen den beiden Rahmen fixierbar ist.

Die DE 197 38 130 A1 offenbart eine Sicherungsvorrichtung für Fracht oder Gepäck in einem Laderaum eines Kraftfahrzeugs, bei der ein auf einer Wickelwelle aufgerolltes Sicherungsnetz in einer Seitenwandung des Laderaumes integriert ist und bei Bedarf unter Umspannung des entsprechenden Gepäckstückes aus der Seitenwandung ausziehbar und an geeigneter Stelle im Laderaum fixierbar ist.

Es ist auch bekannt, (DE 76 34 005 U), in einem Fahrzeuginnenraum einen Fondbereich von einem Fahrerbereich dadurch zu trennen, dass oberhalb der Rückenlehnen des Fahrer- und Beifahrersitzes ein schwenkbeweglich angeordneter Rahmen vorgesehen ist, der sich zwisehen einer Oberkante der Rückenlehnen und einem Dachhimmelbereich erstreckt. Der gitterartige Rahmen ist im Bereich einer Karosseriesäule schwenkbeweglich gelagert und in eine Trennposition überführbar.

Aufgabe der Erfindung ist es, eine Segmentierungsvorrichtung der eingangs genannten Art zu schaffen, die eine verbesserte Ausnutzung des Laderaumes ermöglicht.

Diese Aufgabe wird dadurch gelöst, dass der Rahmen an wenigstens einer Seite mit einem Halteprofil versehen ist, an dem zusätzliche Funktionseinrichtungen lösbar festgelegt sind.

Die Segmentierungsvorrichtung ist vorzugsweise für den Kofferraum eines Stufenheck-Personenkraftwagens vorgesehen, wobei der Rahmen vorteilhaft an einer Deckenwandung des Kofferraumes angeordnet ist und für seine Funktionsposition nach unten herabschwenkt. In seiner Funktionsposition erstreckt sich der Rahmen über die gesamte Höhe des Kofferraumes zwischen dem Kofferraumboden und der Deckenwandung des Kofferraumes, so daß durch den Rahmen eine Aufteilung des Kofferraumes erzielt wird. Der Rahmen ist vorzugsweise um eine in Fahrzeugquerrichtung verlaufende Schwenkachse schwenkbeweglich gelagert. Er kann jedoch auch um eine in Fahrzeuglängsrichtung ausgerichtete Schwenkachse angeordnet sein, so daß er in seiner Funktionsposition zumindest einen unterhalb

Zusätzliche Funktionseinrichtungen können in unterschiedlicher Gestaltung vorgesehen sein. So kann ein eine Abdeckplane oder ein Sicherungsrollo lagerndes Kassettengehäuse an dem Halteprofil festlegbar sein. Es ist auch möglich, weitere Segmentiereinheiten an dem Halteprofil lösbar festzulegen, die lediglich den Laderaumboden segmentieren, ohne sich über die gesamte Höhe des Laderaumes zu erstrecken. Als Funktionseinrichtungen können auch Aufnahme- oder Transportbehältnisse für verschiedenartiges, im Fahrzeug mitzuführendes Gut vorgesehen sein.

In Ausgestaltung der Erfindung ist als Funktionseinrichtung wenigstens eine quer zu der Funktionsposition des Rahmens ausrichtbare Segmentiereinheit vorgesehen. In weiterer Ausgestaltung weist die Segmentiereinheit einen Segmentierbügel auf, der mittels eines Lagerbockes an dem Halteprofil längsverschiebbar angeordnet ist. Dabei kann an dem Halteprofil des Rahmens lediglich ein einzelner Segmentierbügel angeordnet sein. Es können jedoch auch zwei oder mehr Segmentierbügel vorgesehen sein. Durch die Linearverschiebbarkeit des wenigstens einen Segmentierbügels ist es möglich, die entsprechend segmentierten Raumabschnitte des Laderaumes abhängig von dem jeweils transportierten Ladegut variabel zu gestalten.

In weiterer Ausgestaltung der Erfindung sind dem wenigstens einen Segmentierbügel Mittel zur Blockierung des Segmentierbügels in einer beliebigen Zwischenposition zugeordnet. Dadurch wird gewährleistet, daß der Segmentierbügel in der jeweils eingestellten Position am Halteprofil und damit am Rahmen arretiert ist. Der Segmentierbügel erstreckt sich vorzugsweise lediglich über einen Teil der Höhe des Rahmens und damit auch lediglich über einen Teil der Höhe des Kofferraumes oder Laderaumes.

In weiterer Ausgestaltung der Erfindung ist ein sich über wenigstens annähernd die gesamte Länge des Halteprofiles erstreckendes Klemmprofil vorgesehen, das dem Lagerbock räumlich zugeordnet und zumindest teilweise in dem Halteprofil versenkt angeordnet sowie um seine Längsachse schwenkbeweglich gehalten ist, wobei das Klemmprofil wenigstens abschnittsweise derart exzentrisch zu seiner Längsachse gestaltet ist, daß der Lagerbock bei einem Verschwenken des Klemmprofiles relativ zu dem Halteprofil arretierbar oder lösbar ist. Diese Ausgestaltung ist insbesondere dann vorteilhaft, wenn mehr als ein Segmentierbügel vorgesehen sind, da mittels einer Verschwenkung des Klemmprofiles alle Segmentierbügel gemeinsam arretierbar oder für eine Längsverschiebbarkeit lösbar sind. Das Klemmprofil ist vorzugsweise an einer zentralen Stelle mit einem Griffelement versehen, mittels dessen das Klemmprofil manuell verschwenkbar ist und somit wahlweise das Lösen oder Arretieren der Lagerböcke bewirkt. Dadurch kann durch einen einzigen Handgriff ein Lösen oder Arretieren des Klemmprofiles und damit des wenigstens einen Segmentierbügels erreicht werden.

In weiterer Ausgestaltung der Erfindung ist der wenigstens eine Segmentierbügel zwischen einer angeklappten Ruheposition und einer ausgestellten Funktionsposition schwenkbeweglich an dem zugeordneten Lagerbock gelagert. Dadurch wird gewährleistet, daß der wenigstens eine Segmentierbügel in seiner Ruheposition platzsparend am Rahmen angeordnet ist. Damit kann der wenigstens eine Segmentierbügel gemeinsam mit dem Rahmen in dessen Ruheposition verschwenkt werden.

Nachfolgend sind Ausführungsbeispiele der Erfindung beschrieben und anhand der Zeichnungen dargestellt.
- Fig. 1: zeigt in perspektivischer Darstellung einen teilweise aufgebrochenen, nicht zur Erfindung zählenden Kofferraum für einen Personenkraftwagen, in dem eine Segmentierungsvorrichtung angeordnet ist,
- Fig. 2: einen Kofferraum ähnlich Fig. 1 mit einer weiteren Segmentierungsvorrichtung,
- Fig. 3: einen Kofferraum ähnlich den Fig. 1 und 2 mit einer weiteren Segmentierungsvorrichtung, die mehrere Funktionen aufweist,
- Fig. 4: einen Kofferraum ähnlich Fig. 3 mit einer Segmentierungsvorrichtung ähnlich Fig. 3,
- Fig. 5: einen Kofferraum ähnlich Fig. 4 mit einer weiteren Segmentierungsvorrichtung ähnlich Fig. 4,
- Fig. 6: den Kofferraum nach Fig. 5 mit der Segmentierungsvorrichtung nach Fig. 5, aus der eine als Rollplane gestaltete Abdeckplane für einen Kofferraumboden entnommen wird,
- Fig. 7: den Kofferraum nach Fig. 6, wobei die Abdeckplane in ihrer ausgezogenen, den Kofferraumboden abdeckenden Funktionsposition angeordnet ist,
- Fig. 8: einen weiteren Kofferraum eines Personenkraftwagens mit einer Segmentierungsvorrichtung ähnlich Fig. 1,
- Fig. 9: einen Kofferraum, bei dem die Segmentierungsvorrichtung sich in einer versenkten Ruheposition befindet,
- Fig. 10: den Kofferraum nach Fig. 9, wobei ein flexibles Trenngebilde der Segmentierungsvorrichtung in eine Funktionsposition bewegt ist,
- Fig. 11: den Kofferraum nach den Fig. 9 und 10, bei der eine Abdeckplane in eine ausgezogene Funktionsposition überführt ist,
- Fig. 12: den Kofferraum nach den Fig. 9 bis 11, bei der sich ein weiteres, flexibles Flächengebilde in einer Zwischenposition unmittelbar vor seiner Funktionsposition befindet,
- Fig. 13: einen weiteren Kofferraum, der mit einer Segmentiervorrichtung versehen ist,
- Fig. 14: den Kofferraum nach Fig. 13, wobei die Segmentiervorrichtung in ihrer Funktiorisposition dargestellt ist,
- Fig. 15: einen Kofferraum, der mit einer Ausführungsform einer erfindungsgemäßen Segmentiervorrichtung versehen ist,
- Fig. 16: den Kofferraum nach Fig. 15, wobei die Segmentiervorrichtung nach Fig. 15 in ihrer Funktionsposition dargestellt,ist,
- Fig. 17: in vergrößerter Darstellung einen Querschnitt durch ein Halteprofil eines Rahmens der Segmentiervorrichtung nach den Fig. 15 und 16,
- Fig. 18: einen Längsschnitt durch das Halteprofil nach Fig. 17 entlang der Schnittlinie XVIII-XVIII in Fig. 17 in gegenüber Fig. 17 vergrößerter Darstellung,
- Fig. 19: eine weitere Ausführungsform eines Kofferraumes mit einer weiteren Ausführungsform einer erfindungsgemäßen Segmentiervorrichtung,
- Fig. 20: den Kofferraum nach Fig. 19, wobei die Segmentiervorrichtung in die Funktionsposition verschwenkt ist, und
- Fig. 21: in vergrößerter Darstellung einen Querschnitt durch ein Halteprofil eines Rahmens der Segmentiervorrichtung nach den Fig. 19 und 20.

Ein Laderaum in Form eines Kofferraumes 1 für einen in Stufenheckbauweise gestalteten Personenkraftwagen ist in an sich bekannter Weise nach oben durch einen schwenkbaren Kofferraumdeckel 2 begrenzt. Um eine Abtrennung des Kofferraumes 1 in zwei in Fahrzeuglängsrichtung aneinanderschließende Raumabschnitte zu erzielen, ist in einer - in normaler Fahrtrichtung gesehen - rechten Seitenwand des Kofferraumes ein kastenartiges Gehäuse 4 vorgesehen, das einen Teil einer Segmentierungsvorrichtung bildet und mit einem ausziehbaren Flächengebilde 5 versehen ist. Das Flächengebilde 5 ist beim dargestellten Ausführungsbeispiel flexibel gestaltet und nach Art eines Rollos auf eine in dem Gehäuse 4 mit vertikaler Achse gelagerte Rollowelle aufwickelbar. Das Flächengebilde 5 wird durch eine Rückholfeder automatisch in die im Gehäuse 4 eingezogene Ruhelage zurückgezogen, falls es nicht fahrzeugfest fixiert ist. Zur fahrzeugfesten Fixierung sind an der gegenüberliegenden Seitenwand des Kofferraumes zwei Haltemittel in Form von Einhängehaken 7 vorgesehen, in die eine Auszugleiste 6 am vorderen Stirnende des Flächengebildes 5 einhängbar ist.

Das Gehäuse 4 der an der Seitenwand positionierten Segmentierungsvorrichtung kann durch eine Schiebetür 3 verschlossen werden, die mit einer Griffanordnung 8 zum manuellen Verschieben der Schiebetür 3 in Fahrzeuglängsrichtung versehen ist. Die Schiebetür 3 weist entsprechende, fahrzeugfest angeordnete Führungen auf und ist beim dargestellten Ausführungsbeispiel in ihrem oberen Bereich bogenartig gekrümmt. Das Gehäuse 4 kann somit einschließlich des in die Ruheposition eingezogenen Flächengebildes 5 und der Auszugleiste 6 durch die Schiebetür 3 vollkommen verdeckt werden und je nach Notwendigkeit durch eine Verschiebung der Schiebetür 3 freigelegt werden.

Die Segmentierungsvorrichtung in der Seitenwand des Kofferraumes 1 kann auch anders gestaltete Trenngebilde aufweisen. So sind auch ziehharmonikaartig bewegliche Faltanordnungen oder stabile, jedoch zusammen- oder auseinanderschiebbare Trenngitter vorgesehen. Entsprechende Segmentierungsvorrichtungen können zudem auch in mehrfacher Ausführung im Kofferraum 1 angeordnet sein. Es ist auch möglich, entsprechende Trenngebilde einer solchen Segmentierungsvorrichtung in Fahrzeuglängsrichtung zwischen ihren Funktions- und Ruhepositionen zu bewegen. Die Trenngebilde sind sowohl in ihrer Funktionsposition als auch in ihrer Ruheposition fahrzeugfest positioniert. Die Trenngebilde können einschließlich der Segmentierungsvorrichtungen auch lösbar im Bereich des Kofferraumes 1 angeordnet und somit aus dem Fahrzeug entfernbar gestaltet sein.

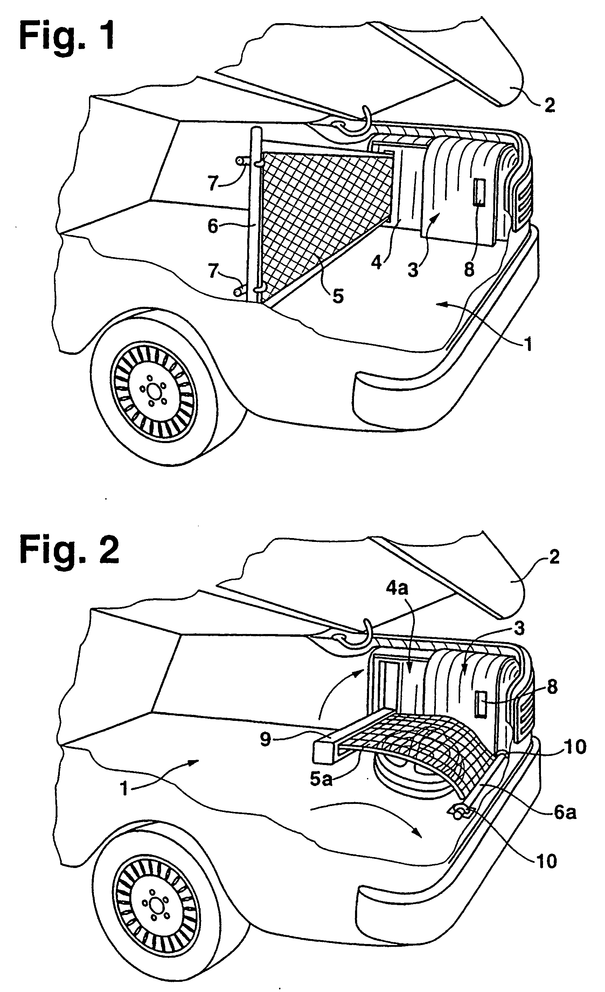

Beim Ausführungsbeispiel nach Fig. 2 ist eine Segmentierungsvorrichtung ebenfalls in einem Seitenwandabschnitt 4a des Kofferraumes 1 angeordnet und in ihrer Ruheposition durch eine Schiebetür 3 verdeckbar. Die Segmentierungsvorrichtung weist ein Kassettengehäuse 9 auf, das in einer vertikalen und in Fahrzeugquerrichtung ausgerichteten Schwenkebene zwischen einer in der Seitenwand 4a versenkten Ruheposition und einer auf dem Kofferraumboden aufliegenden Funktionsposition schwenkbeweglich gelagert ist. Die Schwenkachse befindet sich vorzugsweise im Bereich eines unteren Seitenabschnittes des Kassettengehäuses 9. Das Kassettengehäuse 9 ist in nicht dargestellter Weise auch in seiner Funktionsposition gemäß Fig. 2 auf dem Boden des Kofferraumes 1 arretiert. Das Kassettengehäuse 9 weist ein Trenngebilde in Form eines Rollonetzes 5a auf, das innerhalb des Kassettengehäuses 9 in grundsätzlich bekannter Weise aufwickelbar angeordnet ist. Eine vordere Auszugstange 6a des Rollonetzes 5a ist in fahrzeugfesten, am Boden des Kofferraumes 1 angeordneten Halteösen 10 lösbar fixierbar. Derartige Haltemittel in Form von Halteösen 10 oder anders gestalteter Haltelemente können auch an anderen Wandungsabschnitten des Kofferraumes 1 vorgesehen sein, so daß das Trenngebilde auch in anderen Positionen aufspannbar ist. Selbstverständlich ist das Kassettengehäuse 9 auch in seiner in der Aussparung in der Seitenwand 4a versenkten Ruheposition arretierbar. Eine Arretierung kann auch durch ein Verschließen mittels der Schiebetür 3 erfolgen. In dem Kassettengehäuse 9 können ähnlich den nachfolgend beschriebenen Ausführungen auch weitere Trenngebilde oder Funktionseinheiten untergebracht sein.

Es ist auch möglich, die Segmentierungsvorrichtung teleskopförmig ausziehbar zu gestalten, so daß die Segmentierungsvorrichtung sich analog dem Kassettengehäuse 9 nach Fig. 2 auch bis über die gesamte Breite des Kofferraumbodens ausziehen lassen könnte.

Es ist auch möglich, wenigstens eine weitere Segmentierungsvorrichtung insbesondere in der gegenüberliegenden Seitenwand des Kofferraumes 1 analog dem Ausführungsbeispiel nach Fig. 2 vorzusehen, so daß mittels der beiden Kassettengehäuse zumindest weitgehend die gesamte Breite des Kofferraumbodens durch die Segmentierungsvorrichtungen abdeckbar ist.

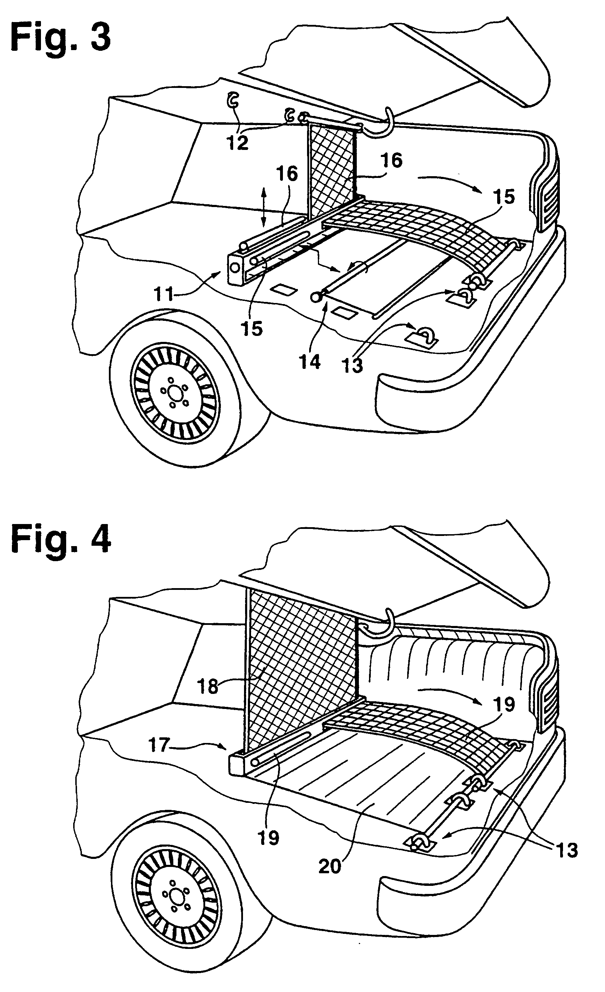

Eine Segmentierungsvorrichtung gemäß Fig. 3 für einen Kofferraum eines Personenkraftwagens weist ein Kassettengehäuse 11 auf, das aus einem Leichtmetall-Strangpreßprofil oder auch aus einem formstabilen und schlagzähen Kunststoff hergestellt sein kann. Das Kassettengehäuse 11 ist am Kofferraumboden arretierbar. Hierzu können entsprechende Profilierungen im Boden vorgesehen sein, in die korrespondierende Profilierungen am Kassettengehäuse 11 einschiebbar sind. Es ist jedoch auch möglich, das Kassettengehäuse 11 mittels anderer Arretiermittel am Boden des Kofferraums festzulegen. Das Kassettengehäuse 11 weist mehrere Funktionseinheiten auf. So sind in einem oberen Bereich zwei in Fahrzeugquerrichtung nebeneinander angeordnete Flächengebilde 16 vorgesehen, die beim dargestellten Ausführungsbeispiel jeweils als netzartige Ausziehrollos gestaltet sind. Die Ausziehrollos sind auf zwei koaxial zueinander angeordneten, jedoch unabhängig voneinander gelagerten Rollowellen angeordnet, die jeweils mit eigenen Rückholfedern versehen sind. Frontseitige Ausziehleisten der Ausziehrollos 16 sind in einem oberen Wandbereich des Kofferraumes an fahrzeugfesten Halterungen 12 lösbar festlegbar.

Das gesamte Kassettengehäuse 11 kann bei Bedarf vom Kofferraumboden gelöst und an geeigneter Stelle im Kofferraum, im Fahrzeug oder außerhalb des Fahrzeugs abgelegt werden.

Das Kassettengehäuse 11 weist zwei weitere, ausziehbare Flächengebilde 15 auf, die ebenfalls beim dargestellten Ausführungsbeispiel als netzartige Ausziehrollos gestaltet sind. Für diese Ausziehrollos 15 ist im Kassettengehäuse 11 ein an einer Seite verlaufender Ausziehschlitz vorgesehen, so daß die Flächengebilde 15 etwa horizontal aus dem Kassettengehäuse 11 ausziehbar sind. Anstelle von zwei Flächengebilden 15 kann auch lediglich ein einzelnes Flächengebilde vorgesehen sein, das sich über die gesamte Breite des Kofferraumbodens und damit über nahezu die gesamte Länge des Kassettengehäuses 11 erstreckt.

Die Flächengebilde 15 sind mit ihren vorderen Auszugleisten an Halteösen 13 am Kofferraumboden fahrzeugfest positionierbar.

Beim dargestellten Ausführungsbeispiel ist das Kassettengehäuse 11 etwa auf halber Länge des Kofferraumbodens positioniert. Es ist jedoch auch möglich, das Kassettengehäuse 11 an anderer Stelle am Kofferraumboden festzulegen, wodurch sich andere Raumaufteilungen des Kofferraumes ergeben. Auch die als Haltemittel dienenden Halteösen 13 müssen nicht notwendigerweise an einer Rückseite des Kofferraumbodens angeordnet sein. Sie können je nach Positionierbarkeit des Kassettengehäuses 11 und nach zu überspannendem Raumabschnitt durch die Flächengebilde 15 entsprechend angepaßt positioniert sein. Es ist auch möglich, die Haltemittel in Form von Halteösen 13 oder anders gestalteten Befestigungselementen an Seitenwänden des Kofferraumes vorzusehen.

Unterhalb der Flächengebilde 15, die analog der Flächengebilde 16 im Kassettengehäuse 11 gelagert sind, ist ein weiterer, sich über die gesamte Länge des Kassettengehäuses 11 erstrekkender Aufnahmeraum vorgesehen, in dem eine zusammenrollbare Abdeckplane 14 unterbringbar ist. Die Abdeckplane 14 ist lösbar in der Aussparung angeordnet und wird bei Bedarf aus dem Kassettengehäuse 11 entnommen. Die Abdeckplane 14 dient als Abdeckung des Kofferraumbodens gegen Verschmutzungen, wobei sie vorteilhaft wasserdicht gestaltet ist. Die Abdeckplane 14 weist an beiden Enden jeweils eine Halteleiste auf, mittels derer die Abdeckplane 14 an entsprechend fahrzeugfesten Haltemitteln 13 auf dem Kofferraumboden in einem entsprechend aufgespannten Zustand festlegbar ist. Je nach Anordnung verschiedener Haltemittel auf dem Kofferraumboden kann die Abdeckplane 14, deren Gesamtlänge etwa der Gesamtlänge des Kofferraumbodens entspricht, lediglich teilweise oder vollständig ausgerollt und entsprechend auf dem Kofferraumboden festgelegt sein, so daß sie den Kofferraumboden teilweise oder vollständig abdecken kann.

Vorzugsweise weist eine Halteleiste der Abdeckplane 14 stirnseitige Lagerelemente auf, mittels derer die Halteleiste nach Art einer Rollowelle in korrespondierenden Lagerelementen innerhalb der Aussparung des Kassettengehäuses 11 drehbeweglich, jedoch lösbar positionierbar ist. Alternativ zu einer vollständigen Entnahme der Abdeckplane 14 kann die Abdeckplane 14 somit auch mit ihrer gegenüberliegenden Halteleiste aus dem Kassettengehäuse 11 ausgezogen werden.

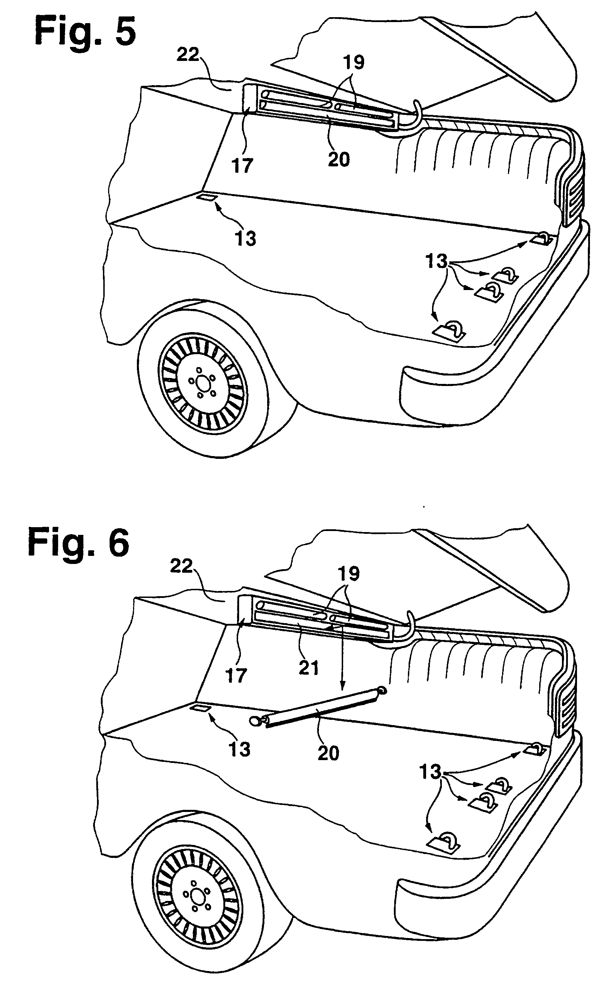

Das Ausführungsbeispiel gemäß den Fig. 4 bis 7 ist ähnlich dem Ausführungsbeispiel nach Fig. 3 gestaltet. Die Segmentierungsvorrichtung weist ein Kassettengehäuse 17 auf, das mit einem nach oben ausziehbaren, sich über die gesamte Länge des Kassettengehäuses 17 erstreckenden Flächengebilde 18 versehen ist. Das Flächengebilde 18 erstreckt sich somit über nahezu die gesamte Breite des Kofferraumes. Das Flächengebilde 18, das beim dargestellten Ausführungsbeispiel netzförmig gestaltet ist, ist mit seinem oberen Stirnende an einem Deckwandungsbereich des Kofferraumes in nicht näher dargestellter Weise fest verankert. Die feste Verankerung kann jedoch lösbar gestaltet sein, so daß das gesamte Kassettengehäuse 17 entfernt werden kann. Das Flächengebilde 18 ist auf einer Rollowelle in dem Kassettengehäuse 17 gelagert, die durch eine Rückholfeder belastet ist. Die Rückholfeder ist so stark ausgelegt, daß das Flächengebilde 18 gegen das Eigengewicht des Kassettengehäuses 17 einschließlich entsprechender zusätzlicher Funktionseinheiten wie weiterer Flächengebilde 19, einer Abdeckplane 20 usw. in die Ruheposition einrollbar ist. Dadurch, daß das Flächengebilde 18 an der Deckwandung des Kofferraumes fest verankert ist, ist das Kassettengehäuse 17 somit in seiner Ruheposition gemäß den Fig. 5 bis 7 durch die Stärke der Rückholfeder oder der Rollowelle für das Fächengebilde 18 an der Deckwandung 22 positioniert. Um das Kassettengehäuse 17 in seine Funktionsposition gemäß Fig. 4 zu überführen, kann es von Hand nach unten gedrückt und im Bereich des Kofferraumbodens an entsprechenden Haltemitteln arretiert werden. Die Haltemittel können analog der zuvor beschriebenen Ausführungsbeispiele gestaltet sein.

Alternativ ist es auch möglich, der Rückholfederanordnung für das Flächengebilde 18 eine entsprechend aktivierbare oder deaktivierbare Sperreinrichtung zuzuordnen. Bei Vorsehen einer solchen zusätzlichen Sperreinrichtung kann die Kraft der Rückholfeder auch schwächer ausgelegt sein. Die Positionierung des Kassettengehäuses 17 in der Ruheposition an der Deckwandung 22 erfolgt dann durch eine entsprechende Aktivierung der Sperreinrichtung.

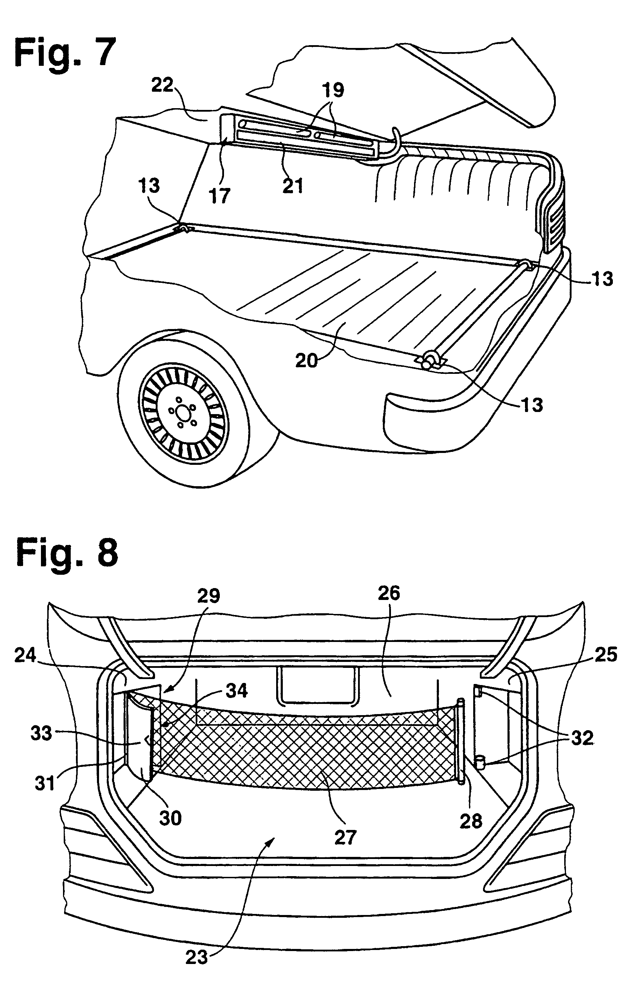

Die etwa horizontal ausziehbaren Flächengebilde 19, die ebenfalls innerhalb des Kassettengehäuses 17 gelagert sind, entsprechen den anhand der Fig. 3 beschriebenen Flächengebilden 15, so daß hierauf nicht näher eingegangen werden muß. Die Abdeckplane 20 ist ähnlich der Abdeckplane 14 nach Fig. 3 gestaltet und dient ebenfalls als wasser- und schmutzabweisende Abdeckung für den Kofferraumboden. Die Abdeckplane 20 ist beim Ausführungsbeispiel nach den Fig. 4 bis 7 analog der Abdeckplane 14 derart in der Aussparung 21 des Kassettengehäuses 17 drehbeweglich gelagert, daß sie mittels der vorderen Halteleiste ausziehbar ist. Alternativ kann die gesamte Abdeckplane 20 gemäß der Darstellung nach Fig. 6 und 7 aus dem Kassettengehäuse 17 entnommen und über den Kofferraumboden aufgespannt werden. Hierzu sind entsprechende fahrzeugfeste Haltemittel 13 im vorderen und rückseitigen Bereich des Kofferraumbodens vorgesehen.

Ein Kassettengehäuse ähnlich dem Kassettengehäuse 17 kann auch direkt an der oberen Deckwandung 22 lösbar festgelegt sein, ohne daß eine Festlegung mittels des Flächengebildes 18 erfolgt. Die Anordnung des Kassettengehäuses 17 an der Deckwandung 22 kann dann ähnlich der Festlegung der zuvor beschriebenen Kassettengehäuse am Kofferraumboden gestaltet sein. Die Kassettengehäuse können zudem mit Aufnahmen oder Befestigungselementen für die Anordnung und Festlegung weiterer Funktionselemente versehen sein. Es können auch einfache Halteaufnahmen für Einkaufstaschen oder -körbe oder für andere, nicht fahrzeugeigene Gegenstände vorgesehen sein. Hierzu kann ein solches Kassettengehäuse insbesondere mit entsprechenden Außenprofilierungen versehen sein, in die entsprechende Schiebeprofile, die mit Haltern oder Befestigungseinheiten für entsprechend beschriebene Funktionseinheiten oder Gegenständen versehen sind, eingesteckt und formschlüssig oder kraftschlüssig fixiert werden können. Diese Ausgestaltung ist besonders vorteilhaft herstellbar, falls das Kassettengehäuse aus einem Strangpreßprofil hergestellt ist.

Das Ausführungsbeispiel gemäß Fig. 8 entspricht im wesentlichen dem zuvor anhand der Fig. 1 beschriebenen Ausführungsbeispiel. Auch die Segmentierungsvorrichtung nach Fig. 8 weist ein als flexibles Trenngebilde gestaltetes Flächengebilde 27 auf, das analog der Vorrichtung nach Fig. 1 in Fahrzeugquerrichtung aus einer Seitenwandung 24, die eine Begrenzungsfläche des Kofferraumes darstellt, ausziehbar ist. Das Flächengebilde 27 ist auf eine.Rollowelle aufwickelbar, die in vertikaler Ausrichtung in einem Hohlraum 29 der Seitenwandung 24 drehbeweglich gelagert ist. Der eine Vertiefung in der Seitenwandung 24 bildende Hohlraum 29 ist durch eine Abdeckung in Form einer Klappe 30 verschließbar, die um eine vertikale Schwenkachse mittels einer Scharnieranordnung 31 an der Seitenwandung 24 schwenkbeweglich gelagert ist. In der ausgezogenen Funktionsposition ragt das Trenngebilde 27 quer durch den Kofferraum hindurch und teilt den Kofferraum in einen vorderen Bereich, der durch die frontseitige Seitenwandung 26 nach vorne und durch das Trenngebilde 27 nach hinten begrenzt ist, sowie einen entsprechend hinteren Bereich auf. Das Trenngebilde 27 steht auf einem als Begrenzungsfläche dienenden Kofferraumboden 23 in seiner Funktionsposition auf und ist in dieser ausgezogenen Funktionsposition, in der eine Auszugleiste 28 in fahrzeugfesten Einhängehalterungen 32 festgelegt ist, straff ausgerichtet. Um die straffe Ausrichtung zu erzielen, ist entweder der Rollowelle eine entsprechende Arretierung zugeordnet, oder das Trenngebilde 27 ist in seiner Länge derart auf die Breite des Kofferraumes abgestimmt, daß es im eingehängten Zustand vollkommen bis zum Ende ausgezogen ist. Die Klappe 30 ist mit einer Arretiervorrichtung in Form einer einfachen Verriegelung 33, 34 in ihrem geschlossenen Zustand festlegbar. Selbstverständlich können jedoch auch andere Formen von Arretiervorrichtungen vorgesehen sein, um die Klappe 30 in ihrer geschlossenen Position, in der sie das in der eingezogenen Ruheposition befindliche Trenngebilde 27 verdeckt, zu halten. Hierzu zählen auch Federanordnungen, die auf die Klappe eine Rückholspannung ausüben und diese in der geschlossenen Position halten.

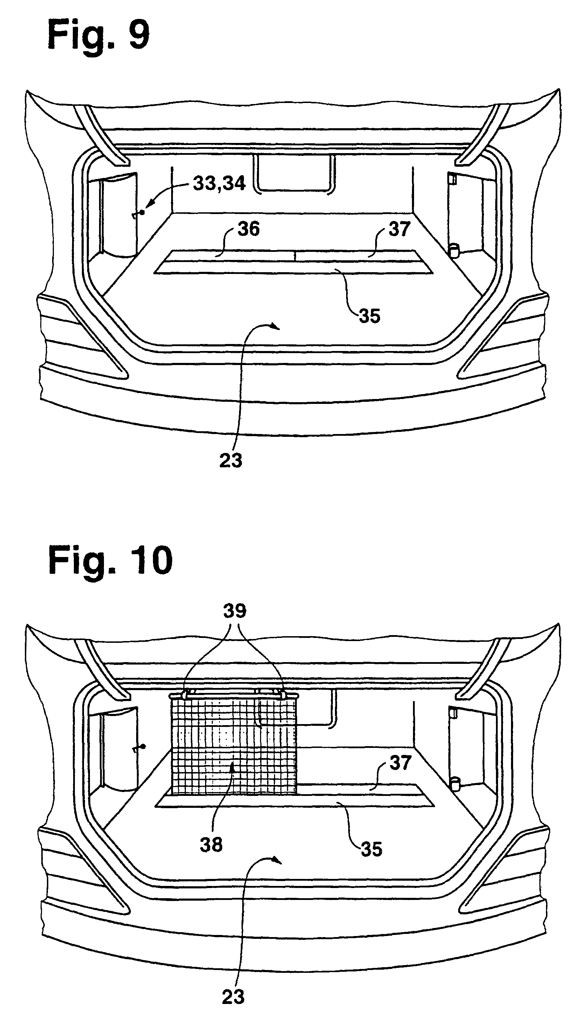

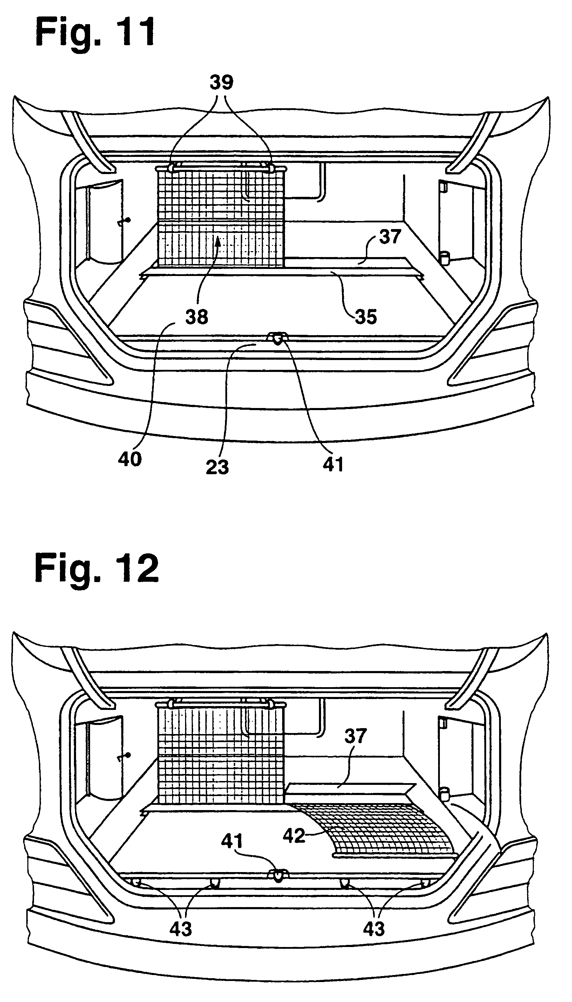

Beim Ausführungsbeispiel nach den Fig. 9 bis 12 ist zusätzlich zu dem Trenngebilde nach Fig. 8, das in einer Seitenwandung des Kofferraumes versenkt ist, noch eine weitere Trennanordnung für die Segmentierungsvorrichtung vorgesehen, die im Kofferraumboden 23 versenkt angeordnet ist. Diese Teile der Segmentierungsvorrichtung entsprechen dabei von Aufbau und Funktion her grundsätzlich einem Ausführungsbeispiel, wie es anhand der Fig. 3 bis 7 zuvor bereits näher beschrieben worden war. Bei dem vorliegenden Ausführungsbeispiel nach den Fig. 9 bis 12 sind die entsprechenden Flächengebilde 38, 40, 42 jedoch nicht in einem aus dem Fahrzeug herausnehmbaren separaten Kassettengehäuse, sondern vielmehr direkt in entsprechenden Vertiefungen im Kofferraumboden 23 angeordnet. Hierzu sind in den Vertiefungen entsprechende Lagerungen für die Flächengebilde in ihrer eingerollten Ruheposition vorgesehen. Die im Kofferraumboden 23 integrierte Segmentierungsvorrichtung weist drei als Hohlräume gestaltete Vertiefungen auf, die mit jeweils einer Abdeckung 35 bis 37 in Form jeweils einer Abdeckklappe verschlossen sind. Dabei sind die Abdeckklappen 36 und 37 nebeneinander angeordnet und weisen jeweils die halbe Breite der Abdeckklappe 35 auf, die an die Abdeckklappen 36 und 37 parallel anschließend hinter diesen positioniert ist. Nach dem Öffnen der entsprechenden Abdeckklappe 35, 36, 37 kann das jeweilige Flächengebilde 38, 40, 42 von Hand in seine jeweilige Funktionsposition ausgezogen und an entsprechend fahrzeugfesten Halterungen 39, 41, 43 festgelegt werden. Das in der jeweiligen Vertiefung noch versenkte, rückseitige Ende jedes Flächengebildes ist in dem jeweiligen Hohlraum ebenfalls fahrzeugfest gehalten, indem es entweder auf einer entsprechenden Rollowelle festgelegt ist, oder aber direkt in fahrzeugfesten Halterungen des Hohlraumes fixiert ist. Die Halterungen sind jeweils als Einhängehaken für entsprechende Auszugleisten der Flächengebilde 38, 40, 42 gestaltet, wobei diese Einhängehaken 39, 41, 43 in eine Ruheposition weggeschwenkt werden können und zum Aufnehmen der jeweiligen Auszugleiste in ihre Funktionsposition verschwenkt werden. Die Einhängehaken 39 sind dabei an einer als Begrenzungsfläche dienenden Decke, d.h. an einer Oberseite, des Kofferraumes positioniert. Die Einhängehaken 41, 42 sind an einer Rückseite des Kofferraumbodens 23 angeordnet. Die Abdeckklappen 35 bis 37 können in nicht dargestellter Weise mit Griffanordnungen zum einfachen Öffnen und Schließen versehen sein. Sie können durch entsprechende Federanordnungen oder in anderer Art und Weise in ihrer geschlossenen Abdeckposition gehalten werden. Anstelle von Federanordnungen können hierbei insbesondere Verriegelungen, Verrastungen oder andere formoder kraftschlüssige Arretierungen vorgesehen sein.

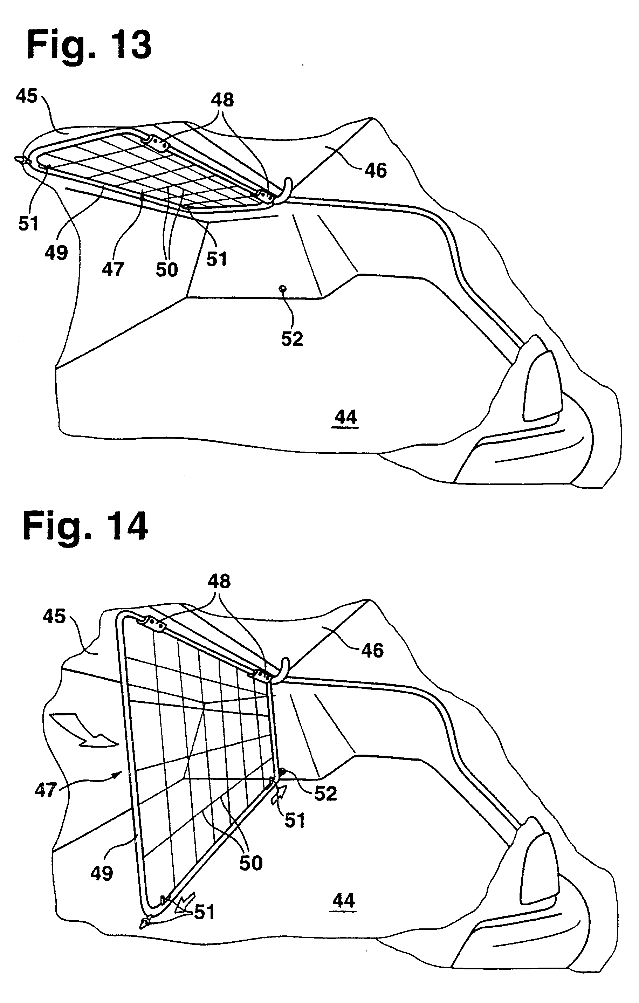

Ein als Laderaum dienender Kofferraum eines Personenkraftwagens gemäß den Fig. 13 und 14 ist mit einem Kofferraumboden 24 sowie mit einer Deckenwandung 45 versehen, die in Fahrzeuglängsrichtung nach vorne an einen Ausschnitt für einen Kofferraumdeckel 46 anschließt. Die Deckenwandung 45 befindet sich unterhalb einer Hutablage des Fahrzeuginnenraumes. An der Deckenwandung 45 ist eine Segmentierungsvorrichtung 47 vorgesehen, die durch einen formstabilen, viereckigen und geschlossenen Rahmen 49 sowie ein in dem Rahmen 49 aufgespanntes Flächengebilde, hier in Form eines Netzes 50, gebildet ist. Diese Segmentierungsvorrichtung stellt ein Trenngebilde 47 dar, das in einer Funktionsposition (Fig. 14) einen in Fahrzeuglängsrichtung vorderen Raumabschnitt des Kofferraumes von einem hinteren Raumabschnitt trennt. Der Rahmen 49 ist mit Hilfe einer Scharnieranordnung 48 an der Deckenwandung 45 des Kofferraumes schwenkbeweglich gelagert, wobei die Schwenklagerung um eine horizontale, in Fahrzeugquerrichtung ausgerichtete Schwenkachse erfolgt. Der Rahmen 49 einschließlich des Netzes 50 ist sowohl in seiner Ruheposition (Fig. 13) als auch in seiner Funktionsposition (Fig. 14) mit Hilfe von zwei Rastschiebern 51 sowie zugeordneten, kofferraumfesten Halterungen 52 festlegbar. Dazu ist in dem in Fig. 14 unteren Längsträger des Rahmens 49 auf beiden Seiten jeweils ein linear nach außen verschiebbarer Schiebebolzen 51 integriert, der mittels eines nicht näher bezeichneten, jedoch aus der Fig. 14 erkennbaren Griffelementes jeweils zwischen einer den Rahmen 49 freigebenden Ruhestellung und einer den Rahmen 49 an der jeweiligen Halterung 52 fixierenden Feststellposition linearverschiebbar ist. An der Deckenwandung 45 des Kofferraumes sind in entsprechender Weise kofferraumfeste Halterungen 52 vorgesehen, in die die Schiebebolzen 51 in der Ruheposition des Rahmens 49 und damit des Trenngebildes 47 eingreifen. Die Schiebebolzen 51 bilden somit sowohl Arretiermittel für die Funktionsposition als auch Sicherungsmittel für die Ruheposition des Trenngebildes 47. Es ist jedoch auch möglich, für die Ruheposition separate Sicherungsmittel vorzusehen, die das Trenngebilde 47 an der Deckenwandung 45 halten.

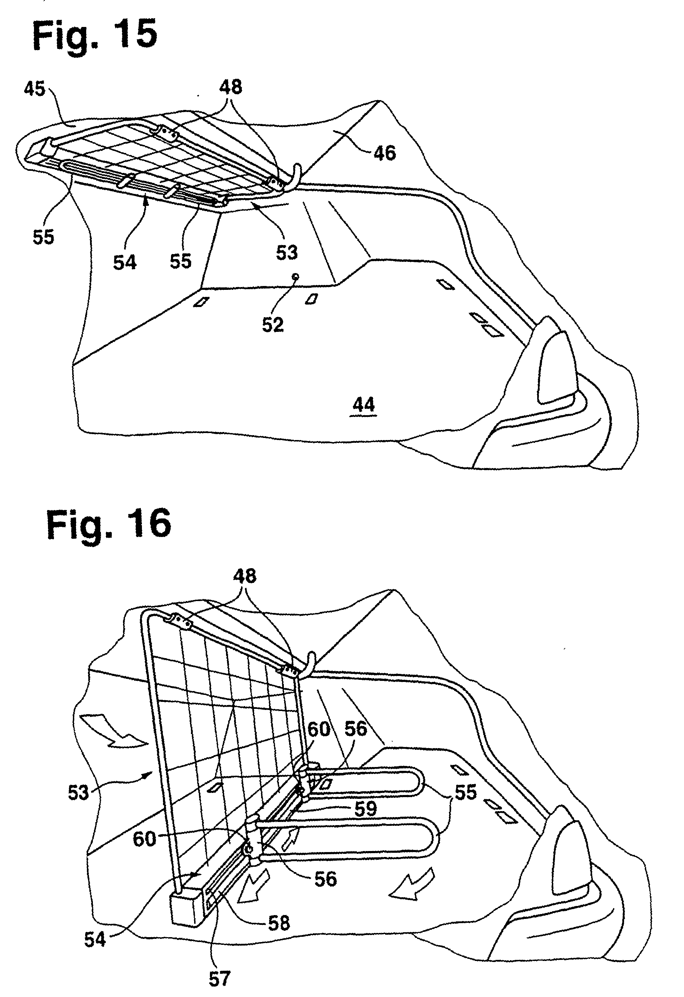

Eine Ausführungsform eines Kofferraumes mit einer Ausführungsform einer erfindungsgemäßen Segmentierungsvorrichtung weist gemäß den Fig. 15 bis 18 ein Trenngebilde 53 auf, das ähnlich dem Ausführungsbeispiel nach den Fig. 13 und 14 mit einem formstabilen Rahmen versehen ist. Der formstabile Rahmen ist mit einem innerhalb des Rahmens aufgespannten Flächengebilde in Form eines Netzes versehen und um eine Scharnieranordnung 48 an der Deckenwandung 45 des Kofferraumes analog dem Ausführungsbeispiel nach den Fig. 13 und 14 schwenkbeweglich gelagert.

Anstelle eines flexiblen Netzes kann auch ein anders gestaltetes, flexibles oder starres Flächengebilde vorgesehen sein.

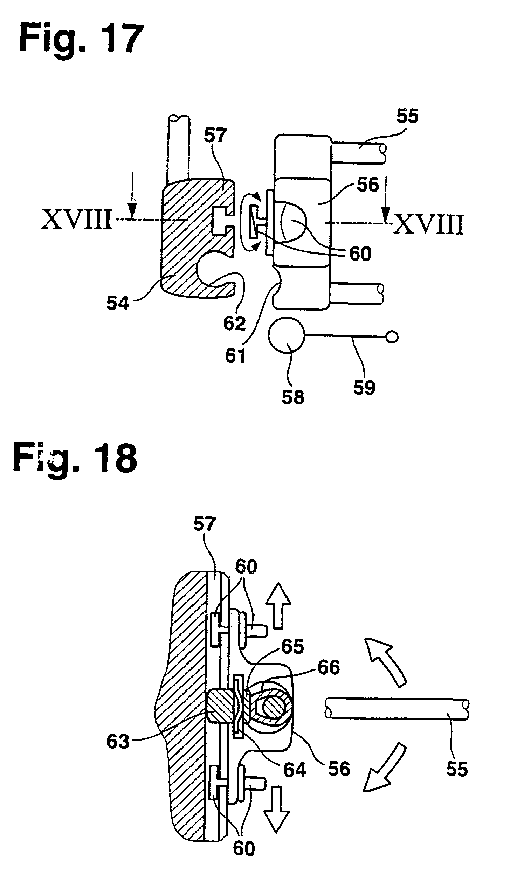

Ein unterer Längsträger des Rahmens des Trenngebildes 53 ist als Halteprofil 54 gestaltet, an dem zwei weitere Segmentierungseinheiten in Form von Segmentierbügeln 55 festgelegt sind. Die beiden Segmentierbügel 55 sind mittels jeweils eines Lagerbockes 56 längsverschiebbar an dem Halteprofil 54 gehalten. Dazu weist das Halteprofil 54 eine sich über die gesamte Länge des Halteprofiles 54 erstreckende Profilnut 57 auf, in die zwei Kulissensteine 60 des Lagerbockes 56 eingreifen. Der Lagerbock 56 ist lösbar in der Profilnut 57 gehalten. Dazu sind die Kulissensteine 60 zum einen mit Hilfe eines Griffelementes wenigstens um 90° drehbar an dem Lagerbock 56 gelagert (Fig. 17). Zum anderen weisen die in die Profilnut 57 eingreifenden Kulissensteine 60 Rechteckform auf, wobei eine Schmalseite an die Höhe des Einführschlitzes der Profilnut 57 und eine Breitseite des Kulissensteines 60 an die Höhe der Profilnut 57 selbst angepaßt sind. Durch eine Verdrehung um 90° ist es somit möglich, die Kulissensteine 60 durch den Einführschlitz in die Profilnut 57 einzusetzen und anschließend um eine erneute Verdrehung um 90° in der Profilnut 57 formschlüssig zu halten. Die Kulissensteine 60 bilden somit Gleitsteine, mittels derer jeder Segmentierbügel 55 längs des Halteprofiles 54 verschiebbar angeordnet ist. Die Kulissensteine 60 können vorzugsweise aus einem gleitfähigen Kunststoff hergestellt sein. Die Segmentierbügel 55 ragen in ihrer Funktionsposition gemäß Fig. 16 von dem in Fahrzeugquerrichtung verlaufenden Halteprofil 55 in Fahrzeuglängsrichtung nach hinten ab, so daß sie den Laderaumboden in insgesamt drei Raumabschnitte unterteilen. Die Segmentierbügel 55 sind stufenlos längs der Profilnut 57 des Halteprofiles 54 verschiebbar. Um die Segmentierbügel 55 in einer gewünschten Position zu arretieren, ist ein Klemmprofil 58 vorgesehen, das in einer entsprechenden Profilierung 62 des Halteprofiles 54 integriert ist. Das Klemmprofil 58 ist innerhalb der Profilierung 62 um seine Längsachse um bestimmte Winkel schwenkbar, wobei das Klemmprofil 58 jedoch keinen kreisförmigen Querschnitt, sondern wenigstens abschnittsweise einen unrunden und damit exzentrischen Querschnitt aufweist.

Das Klemmprofil 58 ragt zu einem bestimmten Betrag über die Profilierung 62 nach außen ab und ist in einer entsprechenden Mulde 61 des Lagerbockes 56 eingebettet. Das Klemmprofil 58 erstreckt sich etwa über die Länge der Profilnut 57. Um eine Verschwenkung des Klemmprofiles 58 von Hand erzielen zu können, ist das Klemmprofil 58 etwa auf Höhe der Fahrzeugmitte mit einem zentralen Griffsteg 59 versehen, der radial nach hinten abragt. Durch eine Verschwenkung des Klemmprofiles 58 wird aufgrund der unrunden, exzentrischen Gestaltung eine Klemmung oder eine Freigabe des Lagerbockes 56 erzielt, da das Klemmprofil 58 je nach Schwenklage etwas mehr oder weniger über die rückseitige Kontur des Halteprofiles 54 abragt und somit auf Höhe der Mulde 61 den Lagerbock 56 festklemmt oder freigibt.

Zusätzlich zu der Linearverschiebbarkeit der beiden Segmentierbügel 55 sind die beiden Segmentierbügel 55 jeweils in eine am Halteprofil 54 anliegende Ruhelage (Fig. 15) verschwenkbar. Dazu ist jeder Segmentierbügel 54 in dem Lagerbock 56 um eine vertikale Achse schwenkbeweglich gelagert. Der Segmentierbügel 55 ist sowohl in seiner Funktionsposition (Fig. 16 und 18) als auch in seiner Ruheposition (Fig. 15) durch eine Rastanordnung gesichert. Dazu ist jeder Segmentierbügel 55 im Bereich des jeweiligen Lagerbockes 56 mit einem exzentrischen Stützprofil 66 (Fig. 16) versehen, das durch einen mittels einer Blattfeder 64 innerhalb des Lagerbockes 56 federelastisch beweglichen Stützstein 63, 65 gesichert ist. Die Blattfeder 64 ist in einem Aufnahmeschlitz des linearbeweglichen Stützsteines 63, 65 gehalten und stützt sich außerhalb des Stützsteines 63, 65 an entsprechenden Aufnahmen des Lagerbockes 56 ab.

Auch in der angeklappten Ruheposition (Fig. 15) ist das Stützprofil 66 des Segmentierbügels 55 mit nicht näher bezeichneten, planen Anlageflächen versehen, die in der jeweiligen Ruheposition des Segmentierbügels 55 flächig an der Stützfläche 65 des Stützsteines 63, 65 abgestützt sind. Die planen Stützflächen des Stützprofiles 66 befinden sich in der Darstellung nach Fig. 18 einander gegenüberliegend um 90° versetzt zu dem Stützstein 65 und damit an der Oberseite und an der Unterseite des Stützprofiles 66. Durch die beschriebenen Stützflächen ist jeder Segmentierbügel. 55 sowohl in seiner Funktionsposition als auch in seiner angeklappten Ruheposition stabil gehalten.

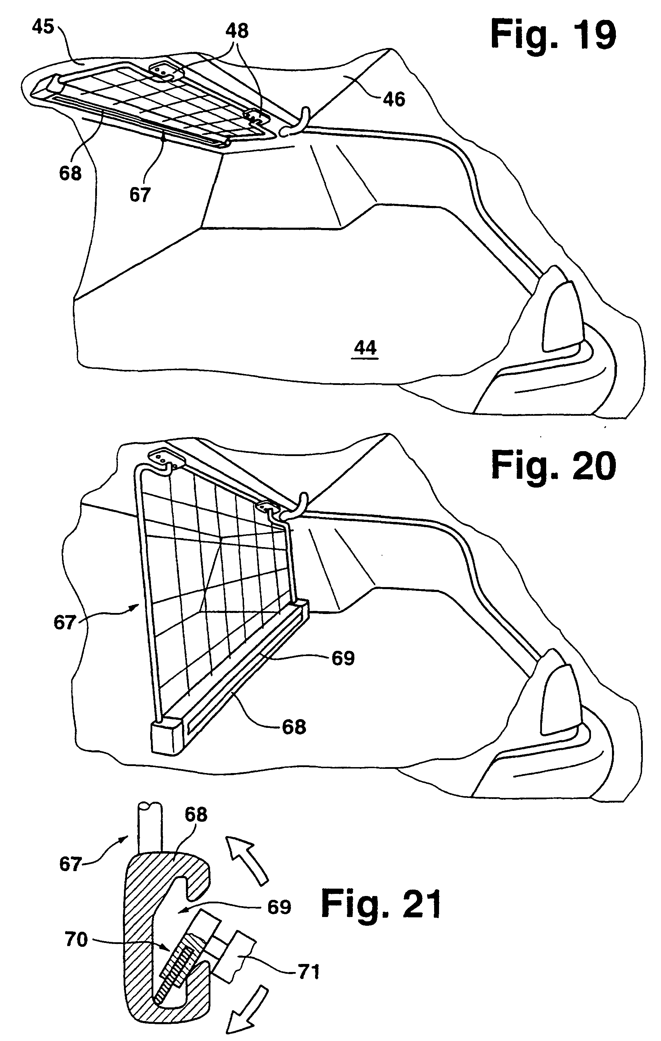

Beim Ausführungsbeispiel nach den Fig. 19 bis 21 ist ein Trenngebilde 67 vorgesehen, das einen formstabilen Rahmen sowie ein in dem Rahmen aufgespanntes Flächengebilde aufweist. Der Rahmen ist im Bereich einer Scharnieranordnung 48 an einer Deckenwandung 45 des Kofferraumes schwenkbeweglich gelagert. Ähnlich dem Ausführungsbeispiel nach den Fig. 15 bis 18 ist ein unterer Längsträger des Rahmens durch ein Halteprofil 68 gebildet, das sich über die gesamte Breite des Kofferraumes und damit über die Gesamtbreite des Rahmens erstreckt. Das Halteprofil 68 ist mit einer polygonal gestalteten Aufnahmenut 69 versehen, die gegenüber einem schmaleren Einführschlitz wesentlich höher gestaltet ist. Die Aufnahmenut 69 dient zur lösbaren Halterung von zusätzlichen Funktionseinrichtungen 71, die in unterschiedlicher Art und Weise gestaltet sein können. Die Funktionseinrichtung 71 nach Fig. 21 stellt ein lediglich angedeutetes Kassettengehäuse dar, in dem eine Abdeckplane für den Laderaumboden 44 aufgerollt integriert ist. In gleicher Weise können jedoch auch anders gestaltete und mit anderen Funktionen versehene Funktionseinrichtungen in der Aufnahmenut 69 festgelegt sein.

Allen Funktionseinrichtungen 71 ist gemeinsam, daß diese mittels wenigstens eines Haltefußes 70 in der Aufnahmenut 69 lösbar festlegbar sind. Beim dargestellten Ausführungsbeispiel weist ein solcher Haltefuß 70 wenigstens einen federbelasteten Haltestift auf, der um bestimmte Beträge gegen die Kraft einer entsprechenden Rückstellfeder in ein Gehäuse des Haltefußes 70 eindrückbar ist. Um die Funktionseinrichtung 71 mittels des wenigstens einen Haltefußes 70 in der Aufnahmenut 69 festzulegen, wird der Haltefuß 70 gemäß der Darstellung nach Fig. 21 schräg in die Aufnahmenut 69 eingeführt und so weit nach unten gedrückt, bis eine Oberkante des Haltefußes 70 den oberen Rand des Einführschlitzes der Aufnahmenut 69 passieren kann. Dann wird die Funktionseinrichtung 71 einschließlich des Haltefußes 70 gemäß der Pfeildarstellung nach oben geschwenkt, wodurch der Haltefuß 70 den oberen Rand des Einführschlitzes hintergreift und sicher in der Aufnahmenut 69 gehalten ist. Ein oberer Abschnitt der Aufnahmenut 69 ist mit einer nicht näher bezeichneten Schräge versehen, die eine Klemmung des oberen Abschnittes des Haltefußes 70 bewirkt, da der Stützstift aufgrund der Federbelastung das Gehäuse des Haltefußes 70 nach oben drückt. Zum erneuten Lösen des Haltefußes 70 und damit der Funktionseinrichtung 71 wird die gesamte Einheit nach unten gedrückt, wodurch der Stützstift sich in das Gehäuse hineinschiebt. Nun kann der Haltefuß 70 nach vorne und nach unten herausgeschwenkt und anschließend entnommen werden.

Alle anhand der verschiedenen Ausführungsbeispiele beschriebenen Merkmale sind nicht auf die beschriebenen Merkmalskombinationen beschränkt, sondern können je nach gestellten Anforderungen auch in anderen Zusammenstellungen miteinander kombiniert werden. Anstelle der dargestellten einzelnen Segmentierungsvorrichtungen sind auch mehrere Segmentierungsvorrichtungen im Kofferraum vorsehbar. Alle beschriebenen Segmentierungsvorrichtungen können in gleicher Weise auch in Laderäumen von Kombi-Personenkraftwagen oder anderen Kraftfahrzeugen vorgesehen sein.

## Patentansprüche

1. Segmentierungsvorrichtung für einen Laderaum eines Kraftfahrzeuges, die wenigstens ein zumindest abschnittsweise formstabiles Trenngebilde (53, 67) aufweist, das in dem Laderaum (1) fahrzeugfest ausrichtbar ist, wobei das Trenngebilde (53, 67) einen formstabilen Rahmen aufweist, der an einer Wandung des Laderaumes zwischen einer an der Wandung anliegenden Ruheposition und einer den Laderaum in wenigstens zwei Raumabschnitte aufteilenden, bis zu einer gegenüberliegenden Wandung erstreckten Funktionsposition schwenkbeweglich gelagert ist,
**dadurch gekennzeichnet, dass**
der Rahmen (53, 67) an wenigstens einer Seite mit einem Halteprofil (54, 68) versehen ist, an dem zusätzliche Funktionseinrichtungen (55, 71) lösbar festgelegt sind.

2. Segmentierungsvorrichtung nach Anspruch 1, **dadurch gekennzeichnet, dass** als Funktionseinrichtung wenigstens eine quer zu der Funktionsposition des Rahmens ausrichtbare Segmentiereinheit (55) vorgesehen ist.

3. Segmentierungsvorrichtung nach Anspruch 2, **dadurch gekennzeichnet, dass** die Segmentiereinheit einen Segmentierbügel (55) aufweist, der mittels eines Lagerbockes (56) an dem Halteprofil (54) längsverschiebbar angeordnet ist.

4. Segmentierungsvorrichtung nach Anspruch 3, **dadurch gekennzeichnet, dass** dem wenigstens einen Segmentierbügel (55) Mittel (58, 59) zur Blockierung des Segmentierbügels (55) in einer beliebigen Zwischenposition zugeordnet sind.

5. Segmentierungsvorrichtung nach Anspruch 4, **dadurch gekennzeichnet, dass** ein sich über wenigstens annähernd die gesamte Länge des Halteprotiles (54) erstreckendes Klemmprofil (58) vorgesehen ist, das dem Lagerbock (56) räumlich zugeordnet und zumindest teilweise in dem Halteprofil (54) versenkt angeordnet sowie um seine Längsachse schwenkbeweglich gehalten ist, wobei das Klemmprofil (58) wenigstens abschnittsweise derart exzentrisch zu seiner Längsachse gestaltet ist, dass der Lagerbock (56) bei einem Verschwenken des Klemmprofiles (58) relativ zu dem Halteprofil (54) arretierbar oder lösbar ist.

6. Segmentierungsvorrichtung nach einem der vorhergehenden Ansprüche, **dadurch gekennzeichnet, dass** der wenigstens eine Segmentierbügel (55) zwischen einer angeklappten Ruheposition und einer ausgestellten Funktionsposition schwenkbeweglich an dem zugeordneten Lagerbock (56) gelagert ist.

7. Segmentierungsvorrichtung nach Anspruch 6, **dadurch gekennzeichnet, dass** der wenigstens eine Segmentierbügel (55) mittels einer Rastanordnung (63, 65, 66) in seiner Ausstellposition und/oder in seiner angeklappten Ruheposition sicherbar ist.

## Claims

1. Partitioning device for a storage space of a motor vehicle, which device has at least one partition web (53, 67) which is structurally stable at least in regions and which can be adjusted so as to be secured to a vehicle in the storage space (1), the partition web (53, 67) having a structurally stable frame which is supported for pivoting movement on a wall of the storage space between a rest position which adjoins the wall and a functional position which divides the storage space into at least two spatial portions and which extends as far as an opposite wall,
**characterised in that**
the frame (53, 67) is provided, on at least one side, with a holding profile (54, 68), to which additional functional devices (55, 71) are releasably secured.

2. Partitioning device according to claim 1, **characterised in that** at least one partitioning unit (55) which can be adjusted transversely to the functional position of the frame is provided in the form of a functional device.

3. Partitioning device according to claim 2, **characterised in that** the partitioning unit has a curved partitioning bar (55) which is arranged in a longitudinally displaceable manner on the holding profile (54) by means of a bearing bracket (56).

4. Partitioning device according to claim 3, **characterised in that** means (58, 59) for blocking the curved partitioning bar (55) in any intermediate position are associated with the at least one curved partitioning bar (55).

5. Partitioning device according to claim 4, **characterised in that** a clamping profile (58) is provided which extends over at least substantially the entire length of the holding profile (54) and which is associated spatially with the bearing bracket (56) and which is arranged in a state at least partially recessed in the holding profile (54) and which is held for pivoting movement about the longitudinal axis thereof, the clamping profile (58) being constructed, at least in regions, in such an eccentric manner relative to the longitudinal axis thereof that the bearing bracket (56) can be stopped or released relative to the holding profile (54) when the clamping profile (58) is pivoted.

6. Partitioning device according to any one of the preceding claims, **characterised in that** the at least one curved partitioning bar (55) is supported for pivoting movement on the associated bearing bracket (56) between a retracted rest position and a deployed functional position.

7. Partitioning device according to claim 6, **characterised in that** the at least one curved partitioning bar (55) can be secured in the deployed position and/or in the retracted rest position thereof by means of a latching arrangement (63, 65, 66).

## Revendications

1. Dispositif de segmentation pour un espace de chargement d'un véhicule automobile, qui présente au moins une structure de séparation (53, 67) au moins pour partie indéformable, laquelle peut être positionnée dans l'espace de chargement (1) de façon solidaire du véhicule, la structure de séparation (53, 67) présentant un cadre indéformable qui est monté sur une paroi de l'espace de chargement en étant mobile en pivotement entre une position de repos, appliquée contre la paroi, et une position de fonctionnement s'étendant jusqu'à une paroi opposée et divisant l'espace de chargement en au moins deux parties d'espace,
**caractérisé en ce que** le cadre (53, 67) est pourvu, sur au moins un côté, d'un profilé de fixation (54, 68) auquel des équipements fonctionnels supplémentaires (55, 71) sont fixés de manière amovible.

2. Dispositif de segmentation selon la revendication 1, **caractérisé en ce qu'**il est prévu, comme équipement fonctionnel, au moins une unité de segmentation (55) pouvant être positionnée transversalement à la position fonctionnelle du cadre.

3. Dispositif de segmentation selon la revendication 2, **caractérisé en ce que** l'unité de segmentation présente un étrier de segmentation (55) qui est disposé, au moyen d'un bloc de palier (56), à translation longitudinale sur le profilé de fixation (54).

4. Dispositif de segmentation selon la revendication 3, **caractérisé en ce que** des moyens (58, 59) sont associés audit au moins un étrier de segmentation (55) pour bloquer l'étrier de segmentation (55) dans une position intermédiaire quelconque.

5. Dispositif de segmentation selon la revendication 4, **caractérisé en ce qu'**il est prévu un profilé de serrage (58) qui s'étend sur au moins approximativement toute la longueur du profilé de fixation (54), est spatialement associé au bloc de palier (56), est disposé au moins partiellement escamoté dans le profilé de fixation (54) et est fixé en étant mobile en pivotement autour de son axe longitudinal, le profilé de serrage (58) étant conçu au moins pour partie excentrique, par rapport à son axe longitudinal, de telle sorte que le bloc de palier (56) peut, lors d'un pivotement du profilé de serrage (58) par rapport au profilé de fixation (54), être bloqué ou libéré.

6. Dispositif de segmentation selon l'une des revendications précédentes, **caractérisé en ce que** ledit au moins un étrier de segmentation (55) est monté sur le bloc de palier associé (56) en étant mobile en pivotement entre une position de repos rabattue et une position fonctionnelle déployée.

7. Dispositif de segmentation selon la revendication 6, **caractérisé en ce que** ledit au moins un étrier de segmentation (55) peut, au moyen d'un agencement d'encliquetage (63, 65, 66), être bloqué dans sa position déployée et/ou dans sa position de repos rabattue.
